# EUROPEAN PATENT APPLICATION

(11) **EP 0 740 408 A2**
(43) Date of publication of application: **30.10.1996**
(21) Application number: 96302897.2
(22) Date of filing: 25.04.1996
(51) Int. Cl.: H02P 7/06

(54) **Home positioning system**

(30) Priority: 26.04.1995 US 429383
(71) Applicant: XEROX CORPORATION, Rochester New York 14644 (US)
(72) Inventor: Rathbun, Darrel R., Ontario NY 14519, Ontario County (US)
(74) Representative: Johnson, Reginald George

(57) **Abstract**

A home positioning system for use in combination with a DC motor driven system, wherein the DC motor (20) is provided with a pulsed input voltage signal to effectively decelerate the motor (20). This pulsed input voltage mode is activated at a predetermined time so that the velocity of the system is reduced as an element (17) approaches a predetermined home position in order to accurately stop the system and precisely locate the element (17) at the home position. The home positioning system is disclosed in combination with a compiler tray (10) of the type utilized in high speed printing systems such as an electrostatographic printing machine, wherein a projection (17) extending from a transport belt (16) can be precisely positioned at a home position in preparation for successive transport cycles.

## Description

The present invention relates to a system for precisely controlling a position at which a DC motor driven system is stopped, and, more particularly, but not exclusively, concerns a compiler tray for use in a high speed printing machine including a DC motor driven belt transport system for delivering document sets to an output tray, wherein the belt transport system is periodically interrupted by deenergizing the DC motor.

In today's marketplace, numerous machines and systems require the transport of a particular element or component along a predetermined path for performing a given function, wherein the particular element must be returned to a precise starting location or so-called "home position" for systematically repeating the transport cycle. For example, in a typical electrostatographic printing machine, output copy sheets are accumulated in a compiler tray for creating a document set which can be delivered to an output tray. The output copy sheets are accumulated as a stack atop a pair of stationary conveyor belts which may be periodically driven through a transport cycle. Thus, when a sufficient number of output copy sheets have been collected, as may be indicated by an output count equaling a predetermined number, a motor is activated for setting the stationary belt into transport motion to deliver the set to the output tray. After delivery of the set to the output tray, the motor is maintained in an activated state so as to continue to drive the belts in transport motion for returning the belts to a predetermined position. However, conventional systems, utilizing DC motors operated at nominal voltages tend to generate substantial mechanical inertia which causes the system to coast past the hbme position. This problem may be exacerbated by manufacturing variability and component life expectancies which combine to produce significant variations in the position at which the system is actually stopped, which, in turn, can cause a detrimental effect on system operating latitudes and can result in system.errors and/or failures.

Various approaches and solutions to the problems inherent to controlling the stop position in a DC motor driven system have been proposed.

US-A-3,883,988 discloses a mechanism for bi-directionally driving a print head including a bidirectional DC motor, wherein a first detector is provided for detecting when the print head reaches a predetermined point on a print line for reversing the direction of energization of the DC motor for a period of time at least sufficient to overcome the inertia of the print head in the first direction and for substantially stopping the print head. Thereafter, the DC motor continues running in its reversed direction to drive the print head in an opposite direction. A second detector is also provided to detect the print head reaching a predetermined point in the opposite direction such that the motor is once again energized in response to an output from the second detector to again reverse the direction for a period of time at least sufficient to substantially stop the print head.

US-A-4,693,595 discloses a method of controlling a stop position of an optical system in a copying machine, wherein the optical system is movable by a motor in a feed direction and in a return direction for returning the optical system to a predetermined home position. Counterconcurrent braking of the motor is performed to decelerate the motor near its home position, whereby the speed of the motor after this braking process is decreased to such a speed that the optical system can be stopped correctly at the home position.

US-A-5,268,836 discloses a mailing machine including a printing drum deceleration and coasting control system, wherein a microprocessor controlled DC motor is connected to a braking switch which may be energized for selective time interval to provided timely control of the deceleration of a posted drum from a substantially constant velocity to rest in its home position.

In accordance with one aspect of the invention, a home positioning system for precisely stopping a system driven by a DC motor to accurately position an element driven thereby at a home position is provided, including: means for applying a pulsed DC voltage signal to the DC motor at a predetermined time to effectively decelerate the system as the element approaches the home position; and means, responsive to positioning of the element at the home position, for deenergizing the DC motor.

In accordance with another aspect of the present invention, a compiler tray for accumulating a plurality of output copy sheets on a support surface to produce a document set is disclosed, wherein the compiler tray includes means for delivering the document set to an output tray and a home positioning system for precisely positioning an element at a predetermined home position along a path of travel thereof, the means means for delivering the document set comprising:a selectively energizable DC motor for driving said document set delivery apparatus; means for applying a pulsed DC voltage signal to said DC motor at a predetermined time to effectively decelerate said document set delivery apparatus; and means, responsive to positioning of the element at the home position, for deenergizing said DC motor to precisely stop transport motion in said document set delivery apparatus.

In accordance with yet another aspect of the present invention, an electrostatographic printing machine including a document set delivery apparatus for transporting a document set to an output tray is provided, wherein the document set delivery apparatus includes a home positioning system for precisely positioning an element at a predetermined home position along a path of travel thereof, comprising: a selectively energizable DC motor for driving the document set delivery apparatus; means for applying a pulsed DC voltage signal to the DC motor at a predetermined time to effectively decelerate the document set delivery apparatus; and means, responsive to positioning of the element at the home position, for deenergizing the DC motor to precisely stop transport motion in the document set delivery apparatus.

In accordance with another aspect of the invention, a method of precisely stopping a system driven by a DC motor to position accurately an element driven thereby at a home position is provided, comprising the steps of applying a pulsed DC voltage signal to the DC motor at a predetermined time as the element approaches the home position to effectively decelerate the system and deenergizing the DC motor upon arrival of the element at the home position.

The present invention will be described further, by way of example, with reference to the accompanying drawings, in which:
FIG. 1 is a perspective view of a compiler tray as may be utilized in an electrostatographic printing machine, wherein a portion of the compiler tray is broken away to illustrate a DC motor driven belt transport system capable of incorporating the home positioning system of the present invention;
FIG. 2 is an elevational side view of the compiler tray shown in FIG. 1; and
FIG. 3 is a graphic representation showing the relationship between voltage and velocity with respect to time as provided by the home positioning system of the present invention.

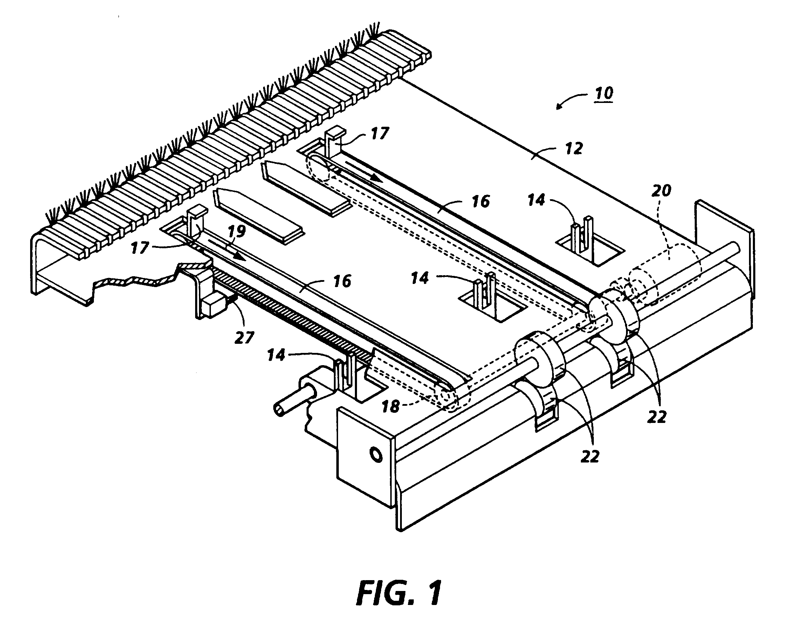

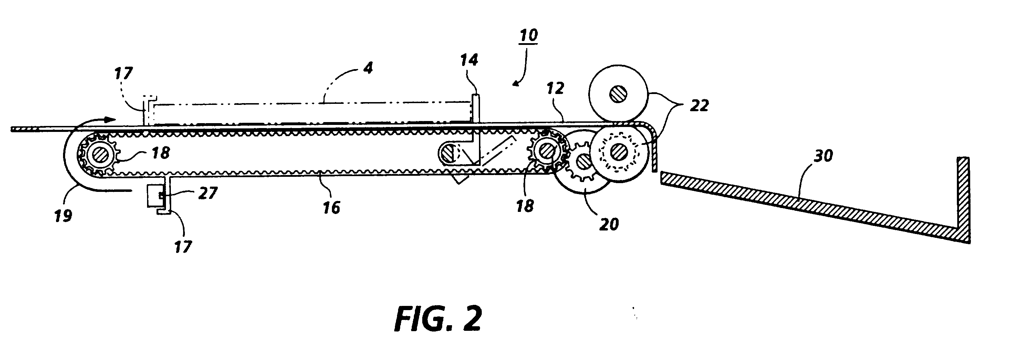

Referring to FIGS. 1 and 2, there is shown a typical compiler tray 10 of the type utilized in an automatic electrostatographic printing machine for accumulating and aligning a plurality of individual copy sheets to produce a document print set 4. It is noted that, although the present invention is particularly well suited for use in automatic electrostatographic printing apparatus, this invention is equally well adapted for use with any number of devices in which a particular element of member must be returned to a precise home position.

In one known form of a compiler tray 10, as shown in FIG. 1, output copy sheets are delivered seriatim onto the upper face of a pair of transport belts 16 extending between a pair of drive rolls 18. At least one portion of each transport belt 16 is coplanarly located with the rigid support surface 12, being situated along an opening therein. Thus, output copy sheets are directed into the tray 10 which acts as a depository for collecting and accumulating copy sheets making up a particular document set. A corner registration apparatus (not shown) may also be provided for urging the output copy sheets into a registration position in the tray 10 so that the copy sheets are pushed into abutment with a registration surface which may include a registration fence comprising at least two pivotable registration fingers 14 which are spaced apart sufficiently to receive A4 and similar size paper while a third finger may be provided to assist in locating output copy sheets of greater dimensions. One exemplary embodiment of a suitable corner registration apparatus is disclosed in US-A-4,541,626, wherein a wiper assembly having a plurality of blades arranged to wipe against the output copy sheets in the compiler tray is provided for urging the sheets into corner registration. As previously noted, the registration fingers 14 are pivotably mounted for rotation about an axis, as described in phantom in FIG. 2, such that the registration fingers 14 may be retracted to allow for ejection of document sets into a collection tray 30 or other suitable collection device such as a stacker which may have an elevating mechanism for providing increased sheet capacity.

When the stack of sheets 4 is complete, as recognized, for example, by a comparison of the number of copy sheets delivered to the compiler tray 10 and the number of sheets in the original document set being copied, a staple may be applied to a corner of the stack, or the stack may be otherwise bound into an integrated group of copy sheet which can thereafter be transported as a defined document set. Document set transport or ejection from the compiler tray 10 is effected by a set eject system, including a motor 20 coupled to a drive roller 18 for driving transport belts 16, whereby the motor 20 is energized to drive the transport belts 16 in a clockwise direction as viewed in the drawing and indicated by arrow 19. In addition, each eject transport belt 16 is provided with a resilient eject finger 17 projecting substantially perpendicularly from the exposed surface of the belt 16, as can be seen in FIG. 1, for assisting in the set eject process. Thus, at the start of a set ejection cycle, motor 20 is energized such that the eject transport belts 16 are driven along the path of travel between rolls 18. Correspondingly, each eject finger 17 is transported into contact with the trail edge of the document set, as depicted in phantom in FIG. 2, causing the document set to move with the belt 16 to deliver the set to the output tray 30. The set delivery process can be assisted by additional transport rollers 22 which may be coupled to motor 20, as shown in FIG. 2.

In the case of the set ejection system described hereinabove, it is very important that, after the set is ejected from the compiler tray, the eject fingers 17 must be transported to a starting, or so-called "home position", in preparation for a subsequent set eject cycle. As such, after a document set is ejected from the compiler tray 10, the DC motor 20 which drives the belts 16 is maintained in an energized state in order to continue to transport the eject fingers 17 until they reach a predetermined point, namely the home position. This predetermined point is specified by a home position switch 27 or other sensor device, as generally indicated by reference numeral 27. The switch or sensor may be coupled directly to DC motor 20 to deenergize the DC motor 20, in order to bring the motor to a stop. Alternatively, the switch 27 may be coupled to a microprocessor such that the switch is operative to produce a trigger signal for de-energizing the DC motor 20. However, as previously noted, conventional DC motors operating at nominal voltages have a tendency to coast after de-energization thereof due to mechanical inertia as well as manufacturing variability and system aging. These factors may combine to produce significant variations in the position at which the system stops after de-energization of the DC motor, which may result in unacceptable deviation in operating conditions. For example,with respect to the compiler tray described hereinabove, the effect of coasting may result in an eject finger 17 coming to rest at a position adjacent to the support surface 12 of the compiler tray 10 such that the eject finger 17 creates an obstruction along the support surface 12, resulting in a system failure as output copy sheets are transported and accumulated in the compiler tray 10.

The present invention is directed toward providing a solution to this coasting problem in that a system for precisely moving a DC motor into its home position is described, wherein the velocity at which the DC motor is driven is reduced by decelerating the DC motor at a predetermined time just prior to arrival at the home position. This deceleration process is accomplished by transforming the nominal DC voltage supplied to the motor 20 to voltage signal for effectively reducing the drive voltage thereto. By providing the nominal DC voltage at a reduced duty cycle, the motor 20 is decelerated to a reduced speed, thereby reducing the mechanical inertia of the system so that the motor 20 can be stopped in correspondence with the eject finger 17 actuation of the home position switch 27.

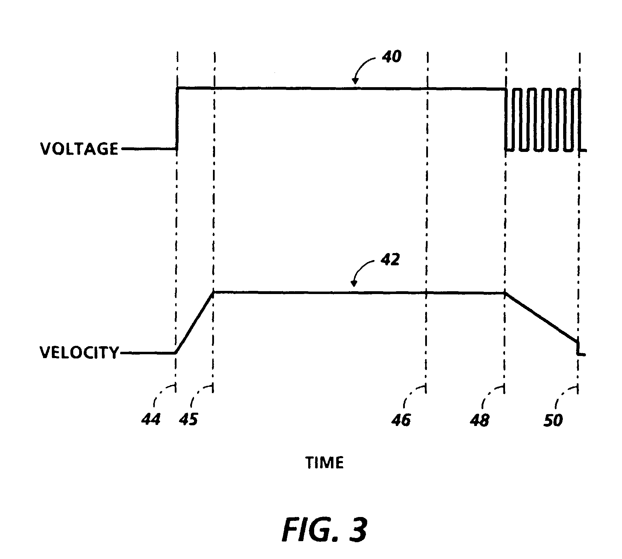

Referring now to FIG 3, a graphical representation of the DC voltage signal 40 and the resultant effect on the motor velocity 42 is illustrated. It will be seen from these figures that a typical stepped, 100% duty cycle DC voltage signal is applied to the DC motor 20, as, for example, upon energization of the motor 20 for starting the set eject cycle represented by point 44. As a result, the velocity of the DC motor 20 ramps up from a zero velocity level to a peak velocity level 45 determined as a function of the DC motor 20. The 100% duty cycle DC signal and the peak velocity condition are maintained after the set is ejected, as indicated by point 46, for continuing to transport the eject fingers 17 to the home position.

Thereafter, a predetermined time in the cycle, the DC voltage signal is pulsed at a lower duty cycle, as indicated by reference numeral 48, having the effect of decelerating the DC motor 20. Finally, the eject finger contacts the home position switch or sensor at point 50 to de-energize the motor 20. Due to the deceleration caused by the pulsed DC voltage, the eject finger 17 necessarily arrives at the home position at a speed lower than peak velocity so that de-energization of the motor accurately stops the system precisely at the home position, as desirable for successive set eject cycles.

It is noted that the present invention contemplates the use of a microprocessor based control system for providing the drive voltage to motor 20. As such, the duty cycle of the pulsed voltage train provided by the present invention for decelerating motor 20 is variably controllable by programming the duty cycle into non volatile memory (NVM) in the microprocessor. For example, the duty cycle can be varied such that the voltage "on" time will be in the range of 2-500 milliseconds while the voltage "off" time might range from 10-20 milliseconds. It will be recognized by those of skill in the art that these "on" and "off" time periods can be varied within an infinite range from nano seconds or less to multiple seconds or greater.

In review, the home positioning system of the present invention includes a DC voltage driven motor wherein the DC voltage may be pulsed at a lower duty cycle in order to decelerate and reduce the speed of the motor as it approaches a predetermined home position where the motor is completely de-energized to bring the motor to a stop. The home positioning system of the present invention provides a simple and inexpensive system for accurately stopping a DC motor driven system at a precise location. This invention may be useful in systems where positioning an element at a precise location is important while obviating the need for an expensive encoder-based system which may necessitate the use of a stepper motor. Although the invention has been described with respect to a linear transport system, it will be recognized by one of skill in the art that the invention can be incorporated in a direct rotary drive system or in other rotary systems such as a DC driven cam assembly as may be utilized in the swiper assembly of previously referenced US-A-4,541,626.

It is, therefore, evident that there has been provided, in accordance with the present invention, a home positioning system that fully satisfies the aims and advantages of the invention as hereinabove set forth. While the invention has been described in conjunction with a preferred embodiment thereof, it is evident that many alternatives, modifications, and variations will be apparent to those skilled in the art. Accordingly, the present application is intended to embrace all such alternatives modifications and variations as are within the scope of the appended claims.

## Claims

1. A method of precisely stopping a system driven by a DC motor (20) to position accurately an element (17) driven thereby at a home position, including:
applying a pulsed DC voltage signal to the DC motor (20) at a predetermined time as the element approaches the home position to effectively decelerate the system; and
de-energizing the DC motor upon arrival of the element at the home position.

2. A method as claimed in claim 1, wherein said applying step includes programming a selectable duty cycle into a microprocessor to specify the pulsed DC voltage signal.

3. A method as claimed in claim 1 or claim 2, wherein said de-energizing step includes:
sensing the position of the element at the home position; and
opening an electrical connection to the DC motor to deenergize said DC motor upon contact with the element.

4. A home positioning system for precisely stopping a system driven by a DC motor (20) to position accurately an element (17) driven thereby at a home position, comprising:
control means for applying a pulsed DC voltage signal to the DC motor (20) at a predetermined time to decelerate effectively the system as the element (17) approaches the home position; and
means (27), responsive to positioning of the element (17) at the home position, for de-energizing the DC motor (20).

5. A home positioning system as claimed in claim 1, wherein said means for applying the pulsed DC voltage signal to said DC motor includes a programmable microprocessor.

6. A home positioning system as claimed in claim 2, wherein said programmable microprocessor includes a nonvolatile memory unit for storing a selectable duty cycle to specify the pulsed DC voltage signal.

7. A home positioning system as claimed in any of claims 4 to 6, wherein said means for de-energizing said DC motor includes a sensor for detecting arrival of the element (17) at the home position.

8. A home positioning system as claimed in claim 7, wherein said sensor includes a switch situated along the path of travel of the element, said switch being coupled to said DC motor for opening an electrical connection therebetween to de-energize said DC motor upon contact with the element.

9. A compiler tray (10) for accumulating a plurality of output copy sheets on a support surface to produce a document set, said compiler tray (10) including means for delivering the document set to an output tray (30) and a home positioning system for positioning an element (17) at a predetermined home position along a path of travel thereof, characterised in that the home positioning system is defined in any one of claims 4 to 8.

10. An electrostatographic printing machine including a document set delivery apparatus for transporting a document set to an output tray, said document set delivery apparatus including a home positioning system for positioning an element (17) at a predetermined home position along a path of travel thereof, characterised in that the home positioning system is defined in any of claims 4 to 8.
